Europäisches Patentamt

European Patent Office

Office européen des brevets

(11) Numéro de publication: **0 206 877**
**A1**

(12) **DEMANDE DE BREVET EUROPEEN**

(21) Numéro de dépôt: 86401167.1

(22) Date de dépôt: 02.06.86

(51) Int. Cl.⁴: **G21C 7/26** , G21C 7/10

(30) Priorité: 05.06.85 FR 8508479

(43) Date de publication de la demande:
**30.12.86 Bulletin 86/52**

(84) Etats contractants désignés:
**BE CH DE FR GB IT LI SE**

(71) Demandeur: **COMMISSARIAT A L'ENERGIE
ATOMIQUE Etablissement de Caractère
Scientifique Technique et Industriel
31/33, rue de la Fédération
F-75015 Paris(FR)**

(72) Inventeur: **Manson, Marcel
4, rue du Pommeret
F-78320 Le Mesnil Saint Denis(FR)**

(74) Mandataire: **Mongrédien, André et al
c/o BREVATOME 25, rue de Ponthieu
F-75008 Paris(FR)**

(54) **Réacteur nucléaire à variation de spectre et à eau sous pression.**

(57) Un réacteur nucléaire à variation de spectre et à eau sous pression comporte des tubes guides (14) dont certains peuvent recevoir successivement lors des rechargements successifs du réacteur, soit des crayons absorbants, soit des crayons de variation de spectre ( 22). Afin d'éviter les vibrations et les chocs des crayons de variation de spectre dans les tubes guides, ces crayons (22) comportent des saillies radiales (42) qui peuvent être formées directement sur le corps du crayon, sur un manchon rapporté sur le corps du crayon ou sous la forme d'un fil enroulé en hélice sur le corps du crayon. En outre, dans le cas d'un crayon de type fertile, la pression interne d'hélium et le traitement thermique du matériau constituant la gaine sont choisis afin que le jeu entre les pastilles et la gaine soit résorbé rapidement en début de cycle.

FIG.3 a

## REACTEUR NUCLEAIRE A VARIATION DE SPECTRE ET EAU SOUS PRESSION

La présente invention concerne un réacteur nucléaire à variation de spectre et à eau sous pression équipé de crayons de variation de spectre d'un type particulier.

Afin d'améliorer l'utilisation de l'uranium qui constitue le combustible nucléaire dans les réacteurs à eau sous pression, on peut équiper ces réacteurs d'un système de variation de spectre neutronique. L'une des manières d'obtenir cette variation consiste à disposer dans le coeur du réacteur un certain nombre de crayons de variation de spectre, assemblés en grappe, et dont le retrait du coeur à un moment donné au cours d'un cycle de fonctionnement entre deux campagnes de remplacement du combustible nucléaire provoque une augmentation du rapport de modération et un glissement du spectre neutronique vers les basses énergies. On obtient ainsi un regain de réactivité et un accroissement du taux de combustion sans enrichir le combustible davantage que dans les réacteurs à eau de conception traditionnelle.

Les crayons de variation de spectre peuvent être des crayons inertes constitués par des barreaux de zirconium, de zircone ou d'alumine, ou des crayons fertiles constitués par un empilement de pastilles d'oxyde d'uranium appauvri placées dans une gaine en alliage de zirconium, l'uranium se transformant en plutonium pendant l'irradiation.

On sait que le coeur d'un réacteur nucléaire à eau sous pression est constitué d'un certain nombre d'assemblages combustibles nucléaires, généralement de section carrée. Chacun de ces assemblages comprend un faisceau de crayons combustibles maintenus en place par des grilles d'espacement parallèles et équidistantes. L'ossature de l'assemblage est constituée par des tubes guides équipés de grilles d'espacement et fixés par leurs extrémités respectivement à un embout inférieur et un embout supérieur de l'assemblage.

Selon la position occupée par l'assemblage combustible dans le coeur du réacteur, les tubes guides des assemblages peuvent recevoir des grappes de natures diverses. Parmi ces grappes, on citera notamment les grappes de contrôle qui sont constituées d'un faisceau de crayons absorbants neutroniques permettant de régler la puissance du coeur et sa répartition axiale en fonctionnement, et de procéder à l'arrêt normal ou rapide du réacteur.

Dans le cas d'un réacteur à variation de spectre et à eau sous pression concerné par la présente invention, les crayons de variation de spectre sont également assemblés en grappes et reçus dans les tubes guides des assemblages qui ne reçoivent pas de barre de contrôle, ou d'un certain nombre de ces assemblages.

Les conditions dans lesquelles les crayons absorbants des grappes de contrôle et les crayons de variation de spectre des grappes de variation de spectre sont appelés à se déplacer dans les tubes guides des assemblages combustibles sont différentes.

Ainsi, les crayons absorbants sont insérés dans le coeur lors des arrêts du réacteur et extraits de celui-ci lors du fonctionnement à pleine puissance. Ils doivent pouvoir être déplacés lentement pour ajuster la puissance délivrée par le réacteur au besoin du réseau. Ils doivent aussi pouvoir chuter très rapidement (quelques secondes) lorsqu'un arrêt rapide du réacteur est requis. Dans ce cas, un système amortisseur doit intervenir en fin de chute afin d'éviter un impact trop brutal de la grappe de crayons absorbants sur l'embout supérieur de l'assemblage combustible.

En ce qui concerne les crayons de variation de spectre, ils sont placés dans le coeur du réacteur en début de cycle, puis extraits du coeur à un certain moment du cycle, pour rester dans le plénum supérieur du réacteur jusqu'à la fin du cycle. Les crayons de variation de spectre sont redescendus dans les assemblages avant la reprise du cycle suivant. Les cinétiques de montée et de descente, commandées par un dispositif de manoeuvre tel qu'un mécanisme hydraulique, peuvent être lentes et uniformes (de l'ordre de plusieurs minutes).

Etant donné que les assemblages combustibles sont changés de position dans le coeur entre chaque cycle de fonctionnement, le même assemblage est appelé à recevoir successivement des grappes de types différents et notamment des grappes de crayons absorbants et des grappes de crayons de variation de spectre. La grappe de variation de spectre comportant généralement davantage de crayons que la grappe de crayons absorbants, les tubes guides peuvent être donc partagés en deux catégories : ceux qui seront susceptibles de recevoir des crayons des deux types et ceux qui ne recevront que des crayons de variation de spectre. Les tubes guides doivent donc être compatibles avec ces deux sortes de crayons mobiles, ce qui implique de rendre compatibles les objectifs suivants, en principe contradictoires :

-permettre une chute rapide des crayons absorbants ;

-limiter les chocs et les vibrations des crayons de variation de spectre, qui contiennent des céramiques fragiles (UO₂, ZrO₂, AlO₃ par exemple).

La difficulté à atteindre ce deuxième objectif est encore plus apparente si l'on observe qu'afin de permettre aux crayons absorbants de chuter plus rapidement dans les tubes guides, on prévoit sur la plus grande partie de la hauteur de ces derniers un jeu entre les crayons et les tubes suffisant pour minimiser les frottements et permettre une évacuation rapide de l'eau chassée par l'introduction du crayon.

De même, lorsque les crayons de variation de spectre sont de type fertile, il est nécessaire de prévoir un refroidissement suffisant pour évacuer la puissance produite en fin d'irradiation par le plutonium formé dans ces crayons. A cet effet, un jeu suffisant doit ici encore être prévu entre le crayon et le tube guide afin de permettre la circulation de l'eau de refroidissement autour du crayon.

Il existe donc pratiquement dans tous les cas un jeu latéral important entre le crayon de variation de spectre et le tube guide dans lequel il est inséré, ce qui n'est pas satisfaisant, compte tenu de la fragilité des crayons de variation de spectre. En effet, ce jeu latéral, ainsi que la circulation rapide de l'eau dans le tube guide, sont sources de vibrations du crayon et de cognements avec le tube guide.

Une solution à ce problème a été proposée dans le brevet français 2 541 810. Dans ce document, des protubérances sont formées sur la paroi interne du tube guide de façon à centrer le crayon de variation de spectre pour améliorer son refroidissement et réduire ses vibrations. Cette solution n'est pas satisfaisante si on l'applique à un assemblage pour réacteur selon la demande où un tube guide doit recevoir deux types de crayons, neutrophages et fertiles, car si elle conduit bien à limiter les chocs et les vibrations lorsque des crayons de variation de spectre sont introduits dans des tubes guides réalisés selon ce brevet, les protubérances formées l'intérieur du tube guide ralentissent considérablement la chute d'un crayon absorbant lorsqu'un tel crayon est introduit dans le tube guide et particulièrement lors d'un arrêt d'urgence du réacteur.

La présente invention a précisément pour objet un crayon de variation de spectre de conception particulière pouvant être introduit dans un tube guide de conception classique apte à recevoir par ailleurs un crayon absorbant, sans que ce crayon de variation de spectre ne soit soumis à des chocs ou à des vibrations importantes.

A cet effet, et conformément à l'invention, il est proposé un réacteur nucléaire à variation de spectre et à eau sous pression comportant des assemblages constitués par un faisceau de crayons combustibles maintenus dans une ossature comportant des tubes guides remplaçant certains crayons combustibles, caractérisé en ce que, certains desdits tubes guides pouvant recevoir successivement lors des rechargements successifs du réacteur soit des grappes de crayons absorbants, soit des grappes de crayons de variation de spectre, les crayons de variation de spectre comportent au moins une saillie radiale assurant le guidage du crayon dans le tube guide et autorisant un écoulement de fluide de refroidissement entre le crayon et le tube guide, d'une extrémité à l'autre de ce dernier.

Selon une première variante de réalisation de l'invention, chaque crayon comprend des saillies radiales disposées selon au moins deux génératrices différentes du corps du crayon et constituées par des protubérances formées sur la face externe du corps du crayon. Dans le cas d'un crayon fertile comprenant une gaine renfermant un empilement de pastilles de matériau fertile, et des bouchons obturant la gaine à ses extrémités, les protubérances sont constituées par des déformations localisées de la gaine et par des parties usinées des bouchons.

Selon une deuxième variante de réalisation de l'invention, chaque crayon comprend, sur la majeure partie de sa longueur, un manchon dont le diamètre externe est sensiblement égal au diamètre interne du tube guide, ce manchon, qui peut être ajouré ou non, présentant des saillies radiales disposées selon au moins deux génératrices différentes du crayon et constituées par des déformations localisées du manchon dirigées radialement vers le corps du crayon. Dans le cas d'un crayon fertile, le manchon est maintenu par des épaulements formés sur le bouchon inférieur.

Selon une troisième variante de réalisation de l'invention, la saillie radiale est formée par un fil enroulé en hélice sur le corps du crayon. Dans le cas d'un crayon fertile, le fil enroulé en hélice est soudé aux bouchons par ses extrémités.

De préférence, afin de réduire les risques de rupture du gainage lorsque les crayons de variation de spectre sont des crayons fertiles, on élimine les risques de déplacement des fragments en réduisant autant que possible les différents jeux à l'intérieur du crayon.

Ainsi, le jeu axial entre les pastilles de matériau fertile peut être supprimé en réalisant sur celles-ci des faces planes en contact les unes avec les autres, leur contact étant assuré par un ressort positionné en partie haute du crayon.

Le jeu radial entre les pastilles et la gaine peut être résorbé relativement rapidement (2 ou 3 mois au plus) pendant le début de vie du crayon fertile, en utilisant isolément ou en combinaison les caractéristiques suivantes :

-faible jeu radial initial, compris entre 50 et 100 microns, entre l'empilement de pastilles et la gaine ;

-faible pression initiale d'hélium à l'intérieur de la gaine, inférieure à 5 bars ;

-réalisation de la gaine en un matériau présentant une vitesse de fluage accélérée à des températures comprises entre 300°C et 350°C.

On décrira maintenant, à titre d'exemple non limitatif, plusieurs variantes de réalisation de l'invention en se référant aux dessins annexés dans lesquels :

-la figure 1 est une vue en perspective représentant partiellement et de façon schématique un assemblage combustible de réacteur nucléaire eau sous pression dans lequel peut être introduite une grappe de crayons de variation de spectre, conformément à l'invention ;

-la figure 2a est une vue en coupe longitudinale d'un tube guide conçu de façon à pouvoir recevoir soit un crayon fertile d'une grappe de contrôle, soit un crayon de variation de spectre selon l'invention ;

-la figure 2b est une vue comparable à la figure 2a représentant un tube guide conçu de façon à ne recevoir qu'un crayon de variation de spectre ;

-les figures 3a et 3b représentent deux modes de réalisation des bouchons d'un crayon de variation de spectre de type fertile réalisé conformément à une première variante de réalisation de l'invention ;

-les figures 4a à 4d représentent quatre modes de réalisation de la gaine d'un crayon de variation de spectre de type fertile réalisé conformément à la première variante de réalisation de l'invention ;

-la figure 5 est une vue en coupe longitudinale schématique d'un outil d'expansion pouvant être utilisé pour réaliser les déformations locales de la gaine représentées sur les figures 4a à 4d ;

-la figure 6 est une vue en coupe transversale - schématique illustrant l'utilisation de l'outil d'expansion de la figure 5 pour réaliser une déformation sur la gaine d'un crayon de variation de spectre de type fertile, à l'intérieur d'une matrice ;

-les figures 7a et 7b sont des vues en perspective représentant deux modes de réalisation d'un manchon destiné à équiper le crayon de variation de spectre conformément à une deuxième variante de réalisation de l'invention ;

-la figure 8 est une vue en perspective - schématique montrant la partie inférieure d'un crayon de variation de spectre muni d'un manchon tel que représenté sur les figures 7a et 7b ;

-la figure 9 est une vue en coupe transversale de la partie inférieure du crayon représentée sur la figure 8 ; et

-la figure 10 est une vue en perspective - schématique représentant une autre variante de réalisation d'un crayon de variation de spectre conforme à l'invention.

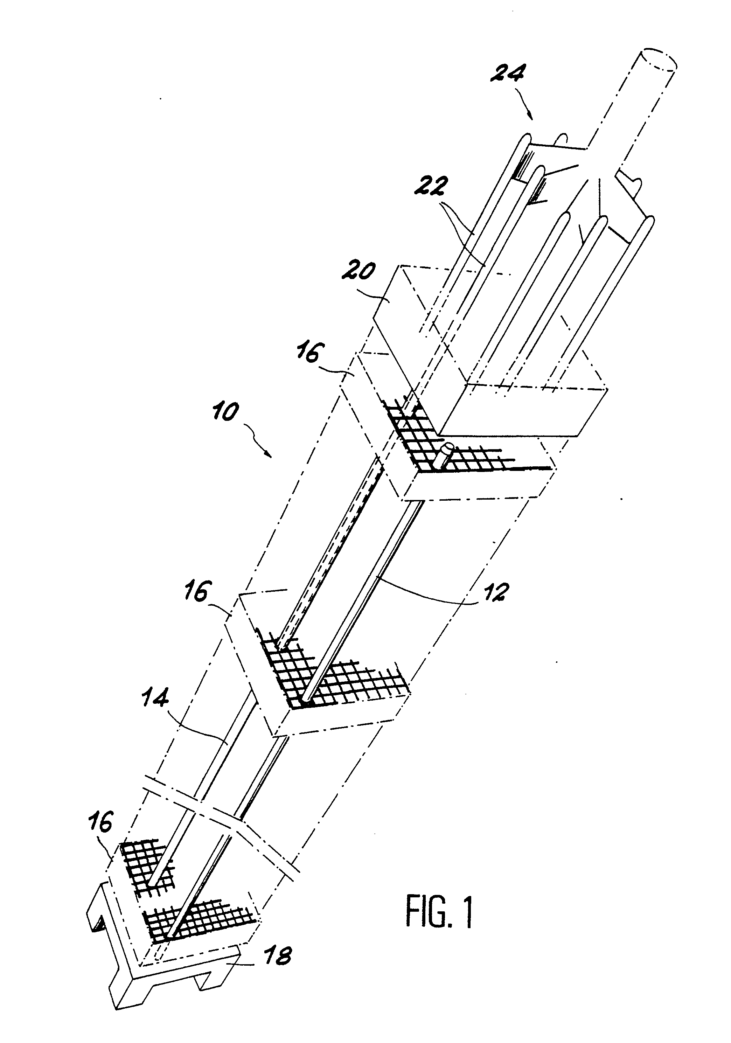

Comme l'illustre de façon non limitative la figure 1, un assemblage combustible 10 de réacteur nucléaire à eau sous pression est constitué par un faisceau de crayons de combustible 12 parmi lesquels sont répartis des tubes guides 14 (pour simplifier un seul crayon et un seul tube guide sont représentés sur la figure 1). Les tubes guides 14 sont équipés de grilles d'espacement 16 parallèles et équidistantes. Les crayons combustibles 12 sont reçus dans les alvéoles des grilles d'espacement 16 laissés libres par les tubes guides 14. A leurs extrémités inférieure et supérieure, les tubes guides 14 sont fixés sur un embout inférieur 18 et sur un embout supérieur 20. l'ensemble formé par les tubes guides 14, les grilles d'espacement 16 et les embouts 18 et 20 constitue l'ossature de l'assemblage. Cette description s'applique à un assemblage à réseau carré ou hexagonal.

En outre, les tubes guides 14 sont aptes à recevoir des grappes de natures diverses qui peuvent être constituées notamment, dans un réacteur à variation de spectre, par les crayons de variation de spectre 22 d'une grappe de variation de spectre 24.

Les assemblages combustibles 10 étant changés de position dans le coeur du réacteur entre chaque cycle, ils doivent être conçus de façon à pouvoir recevoir notamment une grappe à variation de spectre 24 ou une grappe de contrôle constituée de crayons absorbants.

Etant donné qu'une grappe de variation de spectre comporte généralement davantage de crayons qu'une grappe de contrôle, certains des tubes guides de l'assemblage sont donc susceptibles de recevoir des crayons des deux types alors que d'autres ne recevront que des crayons de variation de spectre.

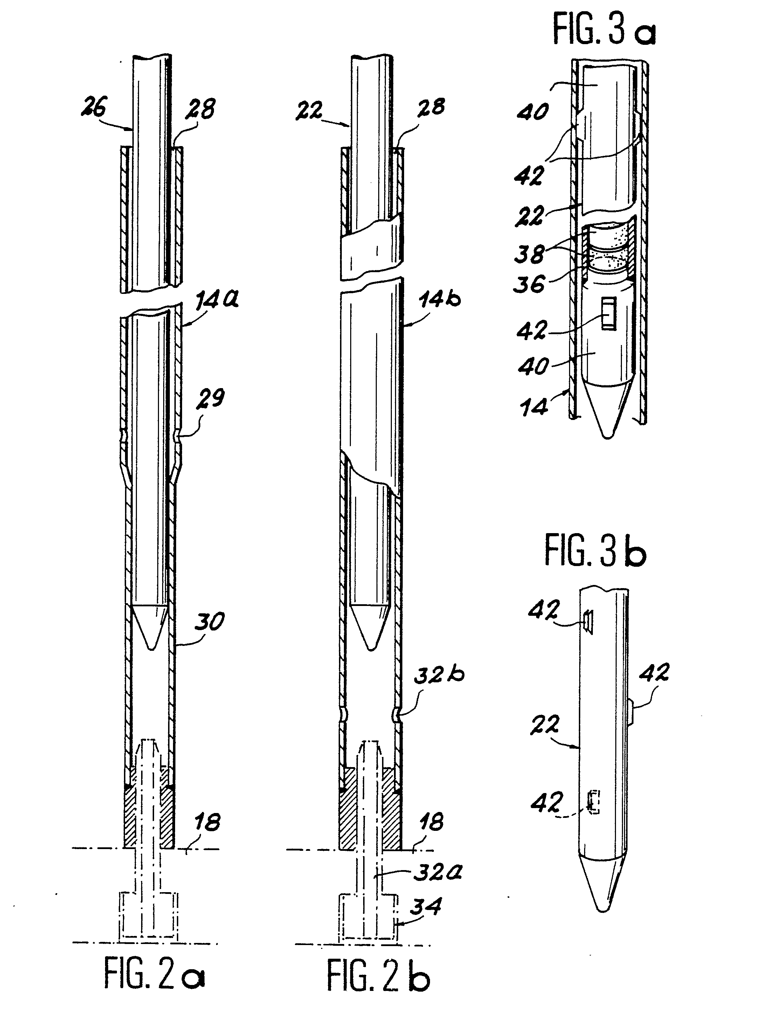

On a représenté sur la figure 2a un tube guide pouvant recevoir successivement,lors des différents cycles pendant lequel l'assemblage reste dans le coeur du réacteur, soit un crayon absorbant d'une grappe de contrôle, soit un crayon à variation de spectre.

Ce tube guide, désigné par la référence 14a, est conçu de façon à permettre une chute rapide du crayon absorbant 26 et un freinage de celui-ci en fin de chute.

Afin que le crayon absorbant 26 puisse chuter rapidement dans le tube guide 14a, un jeu annulaire latéral important 28 est prévu entre le crayon 26 et le tube guide 14 sur la plus grande partie de la hauteur de ce dernier. Ce jeu permet de minimiser les frottements et d'évacuer rapidement l'eau chassée par l'introduction du crayon. Des orifices 29 formés dans le tube guide 14a juste au-dessus du rétreint 30 facilitent la chute du crayon absorbant 26 en permettant une évacuation supplémentaire de l'eau contenue dans le tube guide lors de la chute du crayon.

Le freinage du crayon absorbant 26 en fin de chute est obtenu de façon classique au moyen d'un rétreint 30 formé à la partie inférieure du tube guide 14a. Au niveau de ce rétreint, le jeu latéral entre le crayon absorbant 26 et le tube guide est très faible, de sorte que l'eau qui se trouve emprisonnée dans le bas du tube guide amortit la fin de la chute du crayon absorbant.

Dans le cas du tube guide 14b représenté sur la figure 2b, qui ne recevra que des crayons à variation de spectre 22, il est inutile de prévoir un dispositif de freinage en fin de descente puisque la descente de ces crayons est toujours effectuée lentement.

Lorsque les crayons de variation de spectre 22 sont de type fertile, il est nécessaire de prévoir un refroidissement suffisant pour évacuer la puissance produite en fin d'irradiation par le plutonium formé dans ce crayon.

Un jeu annulaire latéral important 28 est alors prévu entre le crayon de variation de spectre 22 et le tube guide 14b sur toute la hauteur de ce dernier, qui est de section constante. L'eau de refroidissement pénètre dans l'espace délimité par le jeu 28 par un trou 32a formé dans la vis de fixation 34 du tube guide 14b sur l'embout inférieur 18 de l'assemblage, et/ou par des trous 32b formés dans la paroi du tube guide, à son extrémité inférieure. La circulation ascendante de l'eau entre le crayon de variation de spectre 22 et le tube guide 14b s'effectue naturellement sous l'effet de la différence de pression qui existe entre le bas et le haut des assemblages.

Conformément à l'invention, le jeu latéral important 28 qui existe dans tous les cas entre les crayons de variation de spectre 22 et les tubes guides 14 des assemblages n'entraîne pas de vibrations importantes des crayons de variation de spectre ni de cognements de ces derniers avec les tubes guides grâce à la réalisation particulière des crayons de variation de spectre qui va maintenant être décrite.

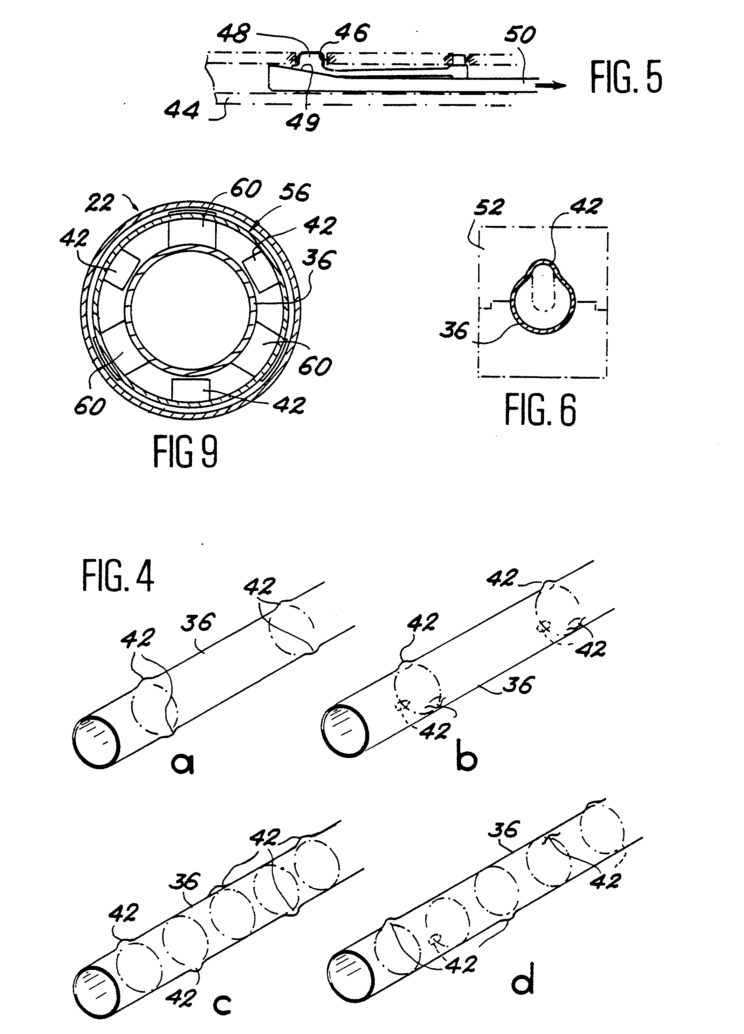

Dans une première variante de réalisation de l'invention représentée de façon schématique sur les figures 3a et 3b et sur les figures 4a à 4d, la surface extérieure du crayon de variation de spectre 22 présente des protubérances 42 faisant saillie radialement vers l'extérieur par rapport à cette surface. La hauteur de ces protubérances 42 est telle que le jeu entre le sommet de ces protubérances et la paroi interne du tube guide 14 est suffisant pour permettre un déplacement axial du crayon dans le tube lorsqu'il est soumis à un effort peu important, et assez faible pour réduire à un niveau acceptable les vibrations et les cognements. A titre d'exemple, on peut admettre à ce niveau un jeu d'environ 0,2 mm sur le rayon du tube guide.

Les figures 3a et 3b ainsi que les figures 4a à 4d illustrent cette variante de réalisation de l'invention dans le cas où le crayon de variation de spectre est de type fertile. Comme le montre la figure 3a, le crayon 22 est alors constitué d'une gaine 36 dans laquelle est logée une colonne de pastilles frittées en céramique 38, par exemple de $UO_2$, $ZrO_2$ ou $Al_2O_3$. Des bouchons usinés 40 sont rapportés par soudage aux extrémités de la gaine 36.

Les figures 3a et 3b représentent plus précisément les bouchons usinés 40 d'un crayon de variation de spectre conforme à la première variante de réalisation de l'invention. Les protubérances 42 formées sur ces bouchons sont obtenues par usinage, lors de la fabrication des bouchons. Suivant la position occupée par les crayons de variation de spectre dans la grappe, l'épaisseur de la protubérance sera adaptée au diamètre intérieur de la partie inférieure du tube guide - (figures 2a et 2b).

Sur la figure 3a, on a représenté le cas où deux protubérances 42 diamétralement opposées sont formées à intervalles réguliers sur les bouchons 40, les protubérances successives étant de plus décalées de 90° les unes par rapport au autres.

Sur la figure 3b, on a représenté le cas où trois protubérances 42 sont disposées à 120° les unes des autres décalées axialement le long du bouchon 40. Dans cette disposition, les protubérances font moins obstacle à la circulation de l'eau tout en assurant un bon guidage.

Les figures 4a à 4d représentent en perspective une partie de la gaine 36 des crayons de variation de spectre de type fertile, selon la première variante de réalisation de l'invention. On voit sur ces figures que les protubérances 42 de la gaine 36 sont réalisées par déformation localisée de celle-ci. Comme sur les bouchons usinés 40, les déformations 42 de la gaine sont disposées selon deux génératrices diamétralement opposées (figures 4a et 4c) ou selon trois génératrices décalées à 120° (figures 4b et 4d). De même, on voit sur les figures 4a et 4b que les déformations 42 de la gaine peuvent être disposées à plusieurs sur une même section, et sur les figures 4c et 4d que ces déformations peuvent aussi être réparties une à une sur toute la hauteur de la gaine.

Il est à noter qu'en plus de l'avantage précédemment indiqué de la réduction locale moindre de la section de passage de l'eau dans le tube guide obtenue dans la solution des figures 4c et 4d, cette solution permet d'annuler en totalité le jeu entre le sommet et les déformations et l'intérieur du tube guide 36. En effet, l'élasticité de ce dernier évite tout risque de coincement du crayon à l'intérieur du tube guide.

A titre indicatif, pour des crayons de variation de spectre présentant des dimensions voisines de celles des crayons combustibles habituels, la distance axiale entre les déformations 42 est de l'ordre de 500 mm dans la répartition des figures 4a et 4b et de l'ordre de 200 mm dans la répartition des figures 4c et 4d.

Dans la variante de réalisation qui vient d'être décrite en se référant aux figures 3a et 3b et 4a à 4d, les déformations localisées de la gaine 36 constituant les protubérances 42 peuvent être réalisées au moyen d'un outil approprié opérant par expansion et actionné par un dispositif mécanique ou hydraulique. Un tel outil est représenté schématiquement à titre d'exemple sur la figure 5. Il comprend un corps tubulaire 44 muni d'une fenêtre 46 au travers de laquelle peut faire saillie radialement vers l'extérieur un doigt mobile 48 dont le déplacement radial est commandé par le déplacement axial d'une tige d'actionnement 50 coulissant à l'intérieur du corps 44 et coopérant avec le doigt 48 par une rampe 49.

Il est à noter que la hauteur des déformations 42 réalisées à l'aide d'un tel outil doit être contrôlée avec précision. De ce fait, la course du doigt 48 et, par conséquent, de la tige d'actionnement 50 est imposée.

Afin d'améliorer encore la précision de réalisation des déformations 42 de la gaine 36, ces déformations peuvent être effectuées au moyen d'un outil du type de celui qui vient d'être décrit sommairement en se référant à la figure 5, à l'intérieur d'une matrice 52, comme l'illustre la figure 6.

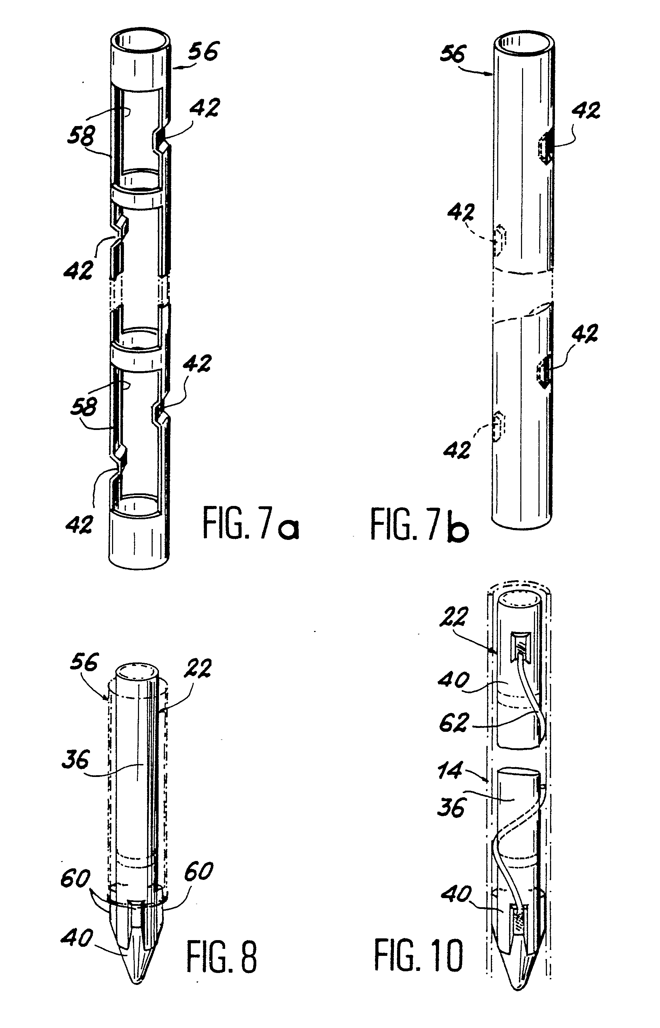

Dans une deuxième variante de réalisation de l'invention représentée sur les figures 7a, 7b, 8 et 9, le guidage du crayon de variation de spectre 22 dans le tube guide 14 est réalisé en montant sur le corps du crayon un manchon 56 qui vient s'intercaler entre le corps du crayon et le tube guide. Afin d'éviter les captures parasites de neutrons, ce manchon 56 est réalisé de préférence en un matériau à base de zirconium.

Dans cette deuxième variante de réalisation, au lieu d'être réalisées directement sur le corps du crayon de variation de spectre, les protubérances 42 servant à assurer le guidage du crayon à l'intérieur du tube guide sont formées sur le manchon 56. Etant donné que la surface externe du manchon 56 définit avec la surface interne du tube guide un jeu latéral limité autorisant juste un déplacement sans effort du crayon à l'intérieur du tube guide, les protubérances formées sur le manchon 56 font saillie radialement vers le corps du crayon 22. Ces protubérances 42 sont par ailleurs réparties de la même manière que dans la variante de réalisation précédente, de façon à combler localement le jeu entre le crayon et le tube guide sans entraver l'écoulement de l'eau entre ces deux éléments.

Sur la figure 7a, on a représenté le cas où le manchon 56 est équipé de fenêtres 58, ce qui permet de limiter l'obstacle à la circulation de l'eau.

Comme l'illustre la figure 7b, si l'espace laissé libre entre le manchon 56 et le crayon de variation de spectre 22 est suffisant pour permettre une bonne circulation de l'eau, les fenêtres 58 peuvent être supprimées. Cette solution simplifie la fabrication.

Comme on le voit sur les figures 8 et 9, le bouchon inférieur 40 du crayon de variation de spectre 22 comporte des épaulements 60 utilisés afin de maintenir en place le manchon 56 sur le corps du crayon 22. Le mouvement du manchon vers le haut peut être limité soit par des épaulements sur le bouchon supérieur, soit par une butée au niveau de la fixation du crayon sur l'araignée de grappe 24.

Dans une troisième variante de réalisation de l'invention représentée sur la figure 10, un fil 62 est enroulé en hélice autour du corps du crayon de variation de spectre 22 afin de combler localement le jeu entre ce crayon et le tube guide 14. Dans le cas particulier représenté où le crayon est de type fertile et comprend une gaine 36 formée par des bouchons 40 à ses extrémités, le fil 62 est soudé à ses deux extrémités aux bouchons 40.

Bien entendu, quels que soient les moyens utilisés pour assurer le guidage du crayon dans le tube guide tout en autorisant l'écoulement de fluide de refroidissement entre le crayon et le tube guide, ces moyens sont prévus sur toute la hauteur du crayon qui se trouve concernée par le jeu latéral 28 sur les figures 2a et 2b. En d'autres termes, les protubérances 42 du crayon, le manchon 56 ou le fil 62 enroulé en hélice s'étendent sur toute la longueur du crayon ou sur la majeure partie de cette longueur selon que le crayon est reçu dans un tube guide 14b présentant une section constante comme l'illustre la figure 2b ou dans un tube guide 14a présentant un rétreint à son extrémité inférieure comme l'illustre la figure 2a.

Dans le cas particulier où le crayon à variation de spectre est de type fertile, on a vu précédemment qu'il se compose d'une gaine 36 en alliage de zirconium fermée par deux bouchons soudés 40 et contenant un empilement de pastilles 38 d'oxyde d'uranium fritté maintenues en contact au moyen d'un ressort hélicoïdal. Une pression interne d'hélium assure normalement les échanges thermiques entre l'oxyde et la gaine et retarde le fluage de cette dernière.

Les pastilles d'UO₂ appauvries, qui contiennent presque exclusivement de l'uranium 238, dégagent en début de vie une puissance quasiment nulle. Ce n'est que lorsqu'une quantité significative d'uranium 238 est transformée en plutonium 239 par capture de neutrons que le crayon dégage une certaine puissance. Lorsque le crayon commence à dégager une puissance significative, donc au bout de plusieurs mois d'irradiation, le fort gradient thermique existant à l'intérieur des pastilles provoque la fissuration de celles-ci et leur fractionnement en plusieurs morceaux.

En dépit des précautions décrites précédemment afin de réduire le niveau de vibrations et de chocs subis par les crayons fertiles du fait de leur mobilité à l'intérieur des tubes guides, des sollicitations de niveau réduit subsistent. Il est donc souhaitable, conformément à un autre aspect de l'invention, d'éviter autant que possible que les morceaux de pastilles qui apparaissent au bout de plusieurs mois d'irradiation puissent se déplacer à l'intérieur de la gaine. En effet, de tels déplacements risquent de conduire à des appuis ponctuels de fragments de pastilles sur la gaine pouvant rompre celle-ci. De plus ils conduisent à une géométrie perturbée, dans laquelle les échanges thermiques entre pastilles et gaine sont moins uniformes.

Afin d'éliminer les risques de déplacement des fragments de pastilles, il est donc souhaitable de réduire, voir de supprimer les différents jeux existants entre les pastilles et la gaine.

Afin de supprimer tout jeu axial entre les pastilles, celles-ci sont de préférence en appui les unes sur les autres par des faces d'appui planes. Il est à noter que cette configuration n'est possible que parce que la dilatation différentielle entre les pastilles et la gaine reste faible, étant donné que le niveau de puissance atteint en fin de vie est peu élevé.

De façon comparable, il est proposé de jouer sur un ou plusieurs paramètres afin de résorber rapidement, par exemple pendant les deux ou trois premiers mois de vie du crayon fertile, le jeu radial inhérent au montage des pastilles dans la gaine, c'est-à-dire pendant une période où il ne dégage pas de puissance et où les pastilles ne se fracturent pas. A cet effet, on joue sur les paramètres suivants :

-le jeu initial est aussi faible que possible, tout en étant suffisant pour permettre un remplissage facile des gaines. Une valeur comprise entre 50 et 100 microns paraît acceptable de ce point de vue ;

-la pression initiale d'hélium à l'intérieur de la gaine est relativement faible et inférieure 5 bars. Cette pression initiale est réalisée après avoir fait le vide dans le crayon de sorte que la pression interne totale ne soit pas augmentée par une pression partielle d'air ;

-la gaine est réalisée dans un matériau présentant une vitesse de fluage accélérée pour les températures de gaine comprises entre 300°C et 350°C atteintes dans la pratique. Pour un alliage à base de zirconium du type zircaloy 4, une vitesse de fluage plus grande est obtenue par exemple en supprimant le traitement thermique de détente intermédiaire entre les deux premières passes de laminage.

Lorsque toutes ces conditions sont réunies, la gaine vient se refermer sur les pastilles avant que celles-ci ne soient fractionnées et que des éclats aient pu se déplacer. Ensuite, lorsque la montée en puissance conduit à la formation de fragments, l'absence de jeux axiaux ou radiaux fait que les pastilles conservent leur intégrité géométrique malgré les chocs et vibrations qui peuvent continuer à s'exercer sur le crayon fertile.

Bien entendu, l'invention n'est pas limitée aux crayons de variation de spectre de type fertile. Elle couvre également les crayons de variation de spectre de type inerte, constitués par des pastilles de zirconium, de zircone ou d'alumine, sur lesquels une ou plusieurs saillies radiales sont formées comme on l'a décrit pour les crayons de type fertile en se référant aux figures 2a à 10.

## Revendications

1. Réacteur nucléaire à variation de spectre et à eau sous pression comportant des assemblages (10) constitués par un faisceau de crayons combustibles (12) maintenus dans une ossature comportant des tubes guides (14) remplaçant certains crayons combustibles, caractérisé en ce que certains desdits tubes guides (14) pouvant recevoir successivement lors des rechargements successifs du réacteur soit des grappes de crayons absorbants, soit des grappes (24) de crayons de variation de spectre (22), les crayons de variation de spectre (22) comportent au moins une saillie radiale (42, 62) assurant le guidage du crayon dans le tube guide et autorisant un écoulement de fluide de refroidissement entre le crayon et le tube guide, d'une extrémité à l'autre de ce dernier.

2. Réacteur selon la revendication 1, caractérisé en ce que les crayons de variation de spectre comprennent des saillies radiales disposées selon au moins deux génératrices différentes du corps du crayon et constituées par des protubérances équidistantes (42) formées sur la face externe du crayon (22).

3. Réacteur selon la revendication 2, caractérisé en ce que les crayons de variation de spectre comprennent une gaine (36) renfermant un empilement de pastilles (38) de matériau fertile, et des bouchons (40) obturant la gaine à ses extrémités, lesdites protubérances (42) étant constituées par des déformations localisées de la gaine (36) et par des parties usinées des bouchons (40).

4. Réacteur selon la revendication 1, caractérisé en ce que les crayons de variation de spectre comprennent sur la majeure partie de leur longueur un manchon (56) dont le diamètre externe est sensiblement égal au diamètre interne du tube guide (14), ce manchon présentant des saillies radiales (42) disposées selon au moins deux génératrices différentes du crayon et constituées par des déformations localisées du manchon dirigées radialement vers le corps du crayon.

5. Réacteur selon la revendication 4, caractérisé en ce que le manchon (56) est ajouré pour faciliter l'écoulement du fluide de refroidissement.

6. Réacteur selon l'une quelconque des revendications 4 et 5, caractérisé en ce que les crayons de variation de spectre comprennent une gaine (36) renfermant un empilement de pastilles (38) de matériau fertile, et des bouchons inférieur et supérieur (40) obturant la gaine à ses extrémités, le manchon (56) étant maintenu par des épaulements (60) situés aux extrémités du crayon.

7. Réacteur selon la revendication 1, caractérisé en ce que les crayons de variation de spectre comprennent sur toute leur longueur un fil (62) enroulé en hélice sur le corps du crayon.

8. Réacteur selon la revendication 7, caractérisé en ce que les crayons de variation de spectre comprennent une gaine (36) renfermant un empilement de pastilles (38) de matériau fertile et des bouchons (40) obturant la gaine à ses extrémités, le fil (62) enroulé en hélice étant soudé aux bouchons (40) par ses extrémités.

9. Réacteur selon l'une quelconque des revendications 3, 6 et 8, caractérisé en ce que l'empilement de pastilles (38) est logé dans la gaine (36) avec un jeu radial initial compris entre 50 et 100 microns.

10. Réacteur selon l'une quelconque des revendications 3, 6, 8 et 9, caractérisé en ce que la gaine (36) est sous une pression initiale d'hélium inférieure à 5 bars.

11. Réacteur selon l'une quelconque des revendications 3, 6, 8, 9 et 10, caractérisé en ce que la gaine (36) est réalisée en un matériau présentant une vitesse de fluage accélérée à des températures comprises entre 300°C et 350°C.

12. Réacteur selon l'une quelconque des revendications 3, 6, 8, 9, 10 et 11, caractérisé en ce que les pastilles (38) de matériau fertile sont en contact les unes avec les autres par des faces planes.

FIG. 1

FIG. 3 a

26  28

22  28

40  42  22  38  36  42  40  14

14a

29

30

FIG. 3 b

42  42  22  42

32b

18

32a  34

18

FIG. 2 a

FIG. 2 b

0 206 877

FIG. 5

FIG 9

FIG. 6

FIG. 4

FIG. 7a

56
58
42
42
58
42
42

FIG. 7b

56
42
42
42
42

FIG. 8

56
22
36
60    60
40

FIG. 10

22
40
62
14
36
40

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| D,Y | FR-A-2 541 810 (FRAMATOME & CIE) * Page 3, ligne 33 - page 4, ligne 24; page 4, lignes 28-32; figures 1,2 * | 1 | G 21 C 7/26 G 21 C 7/10 |
| D,A | | 3,8,9, 12 | |
| | --- | | |
| Y | US-A-4 311 560 ( F. VERDONE) * Revendication 1; figure 7 * | 1 | |
| | --- | | |
| A | FR-A-2 244 234 (U.S. ATOMIC ENERGY COMMISSION) * Page 4, lignes 1-6,14-16; figure 1 * | 1,7,8, 12 | |
| | --- | | DOMAINES TECHNIQUES RECHERCHES (Int. Cl.4) |
| A | EP-A-0 108 020 (FRAMATOME & CIE) * Abrégé; page 6, lignes 19-24 * | 1,3,8, 9,12 | G 21 C |
| | ----- | | |

Le présent rapport de recherche a été établi pour toutes les revendications

| Lieu de la recherche | Date d'achèvement de la recherche | Examinateur |
|---|---|---|
| LA HAYE | 09-09-1986 | GALANTI M. |